# EUROPÄISCHE PATENTANMELDUNG

(11) **EP 0 924 122 A1**
(43) Veröffentlichungstag der Anmeldung: **23.06.1999**
(21) Anmeldenummer: 98122473.6
(22) Anmeldetag: 26.11.1998
(51) Int. Cl.: B60R 21/16

(54) **Sicherheitsvorrichtung für ein Kraftfahrzeug**

(30) Priorität: 22.12.1997 DE 19757374
(71) Anmelder: TAKATA (EUROPE) VEHICLE SAFETY TECHNOLOGY GmbH, 89081 Ulm (DE)
(72) Erfinder: Kopetzky, Robert, 89173 Lonsee (DE); Heudorfer, Benedikt, 89278 Nersingen (DE); Glöckler, Oliver, 89278 Nersingen (DE); Einsiedel, Heinrich, 89073 Ulm (DE)
(74) Vertreter: Finsterwald, Manfred, Dipl.-Ing., Dipl.-Wirtsch.-Ing.

(57) **Zusammenfassung**

Eine Sicherheitsvorrichtung für ein Kraftfahrzeug weist einen Luftsack (10) und ein den Luftsack (10) entfaltendes Element (12) auf, das aus einem Schlauch (14, 16) besteht, der sich bei Expansion verkürzt.

## Beschreibung

Die vorliegende Erfindung betrifft eine Sicherheitsvorrichtung für ein Kraftfahrzeug, mit einem Luftsack und einem den Luftsack entfaltenden Element.

Derartige Sicherheitsvorrichtungen sind grundsätzlich bekannt und dienen zum Schutz des Fahrzeuginsassen bei einem Unfall.

Aus der EP 0 808 257 A1 ist eine Sicherheitsvorrichtung für ein Kraftfahrzeug bekannt, bei der ein Luftsack im Bereich des Türrahmens der Fahrzeugtüre angeordnet ist und sich vom Fahrzeughimmel aus im Bereich des Türfensters nach unten erstreckt, um bei einem Seitenaufprall den Kopf des Insassen zu schützen. Die Entfaltung des Luftsacks erfolgt hierbei herkömmlich durch einen Gasgenerator.

Es ist die Aufgabe der vorliegenden Erfindung, eine Sicherheitsvorrichtung für ein Kraftfahrzeug zu schaffen, die den Fahrzeuginsassen insbesondere bei einem Seitenaufprall schützt und die bei schneller Reaktionszeit ein geringes Verletzungsrisiko im Schulterbereich des Fahrzeuginsassen aufweist.

Die Lösung dieser Aufgabe erfolgt durch die Merkmale des Anspruchs 1 und insbesondere dadurch, daß das den Luftsack entfaltende Element zumindest einen Schlauch aufweist, der sich bei Expansion verkürzt. Erfindungsgemäß wird somit der Luftsack nicht ausschließlich durch Befüllen mit Gas entfaltet, sondern es ist zusätzlich ein aktives Element vorgesehen, das den Luftsack aus seinem Gehäuse herauszieht. Erfindungsgemäß ist hierfür jedoch kein starres Seil oder dergleichen vorgesehen, sondern der Luftsack wird unter Zuhilfenahme eines sich bei Expansion verkürzenden Schlauches entfaltet.

Die erfindungsgemäße Anordnung bietet den großen Vorteil, daß sich der Luftsack sehr schnell entfaltet, da dieser aktiv gespannt wird. Gleichzeitig ist jedoch eine Verletzungsgefahr des Insassen minimiert, da das den Luftsack spannende Element aus einem Schlauch besteht, der durch seine Verkürzung aufgrund einer Expansion ein Spannen und Herausziehen des Luftsackes aus seinem Gehäuse bewirkt. Im gespannten Zustand ist der Schlauch expandiert, d.h. mit Luft oder Gas gefüllt, so daß hier eine Verletzungsgefahr minimiert ist und ein zusätzliches Aufprallpolster für den Fahrzeuginsassen geschaffen ist, das insbesondere dessen Schulterbereich zusätzlich schützt.

Vorteilhafte Ausführungsformen der Erfindung sind der Beschreibung, den Zeichnungen sowie den Unteransprüchen beschrieben.

Nach einer ersten vorteilhaften Ausführungsform ist der Luftsack teilweise innerhalb des Schlauches angeordnet. Hierdurch ergibt sich die Möglichkeit, durch Expandieren des Luftsackes zunächst denjenigen Bereich mit Gas zu füllen, der sich innerhalb des Schlauches befindet. Hierdurch expandiert der Schlauch und verkürzt sich, so daß der Luftsack aus seinem Gehäuse gezogen und anschließend entfaltet wird.

Nach einer weiteren Ausführungsform kann in dem Luftsack ein Ventil vorgesehen sein, das bei Erreichen eines vorbestimmten Druckes den Strömungsweg zu einem weiteren Luftsackbereich öffnet. Durch ein derartiges Ventil kann sichergestellt werden, daß zunächst der innerhalb des Schlauches befindliche Luftsackbereich mit einem vorbestimmten Druck gefüllt ist, bevor das Gas in den übrigen Luftsackbereich strömt. Ein derartiges Ventil kann dadurch realisiert werden, daß in dem Luftsack eine Trennwand vorhanden ist, die mit einer Sollbruchstelle versehen ist, so daß nach Erreichen eines vorbestimmten Druckes innerhalb des in dem Schlauch befindlichen Luftsackbereiches die Sollbruchstelle geöffnet wird und das Gas in den restlichen Luftsackbereich strömt.

Nach einer weiteren vorteilhaften Ausführungsform können zumindest zwei beabstandet miteinander verbundene Schläuche vorgesehen sein. Hierdurch ergibt sich einerseits die Möglichkeit, zwei Schläuche mit unterschiedlichem Kontraktionsverhalten einzusetzen, um ein an das Fahrzeug abgestimmtes Herausziehen des Luftsacks aus seinem Gehäuse zu erzielen. Andererseits kann der Luftsack, der sich innerhalb der beiden Schläuche befindet, in dem Bereich zwischen den Schläuchen herausgeführt werden und sich im Anschluß daran verbreitern, um den Insassenkopfschutz zu bilden.

Der Schlauch kann an einem Ende oder an beiden Enden fahrzeugseitig befestigt sein, so daß durch eine Kontraktion des Schlauches oder der Schläuche gleichzeitig ein Spannen erfolgt, so daß der als Kopfschutz dienende Luftsack oder Luftsackbereich aus seinem Gehäuse herausgezogen wird.

Das den Luftsack entfaltende Element kann ein Abschnitt des eigentlichen Luftsacks sein, der als Insassenkopfschutz dient. Alternativ kann jedoch auch ein weiterer Luftsack vorgesehen werden, der innerhalb des Schlauches angeordnet ist und diesen expandiert.

Nach einer weiteren vorteilhaften Ausführungsform ist der Schlauch derart am Fahrzeug befestigt, daß dieser nach seiner Expansion und Verkürzung nicht geradlinig sondern gekrümmt oder geknickt verläuft. Durch eine solche Gestaltung läßt sich eine bessere Interaktion mit den Sicherheitsgurten der Fahrzeuginsassen erzielen und die Sicherheitsvorrichtung neigt beim Straffen weniger zu einem Überschwingen. Insbesondere wenn der Schlauch etwa in seiner Mitte im Bereich der B-Säule des Fahrzeugs befestigt ist, kann ein Insassenschutz für zwei hintereinander in einem Fahrzeug sitzende Personen erzielt werden, wobei hierfür nur eine einzige Sicherheitsvorrichtung erforderlich ist. In diesem Fall ist es vorteilhaft, wenn sich der Luftsack etwa von der A-Säule bis zur C-Säule des Fahrzeugs erstreckt, wobei der Schlauch in diesem Fall vorzugsweise an seinen beiden Enden an der A-Säule und der C-Säule befestigt ist.

Vorzugsweise ist der Luftsack mit dem Schlauch über Bänder verbunden, wodurch sich der Schlauch zunächst entkoppelt von der Entfaltung des Luftsackes spannen kann, wobei gleichzeitig bei der Entfaltung des Luftsackes eine Entkopplung zu dem Spannschlauch vorgesehen ist.

Der Luftsack und der Schlauch sind vorzugsweise im Türrahmen und/oder Dachhimmel eines Fahrzeugs untergebracht, wobei die Anordnung bevorzugt so ausgeführt ist, daß der Schlauch im expandierten und verkürzten Zustand etwa auf Schulterhöhe des oder der Insassen angeordnet ist. Hierdurch bietet der Schlauch neben seiner Funktion als Spannelement eine zusätzliche Sicherheitseinrichtung für die Insassen.

Der innerhalb des Schlauches befindliche Luftsack kann an einem Ende mit einem Gasgenerator in Verbindung stehen und an seinem anderen Ende geschlossen sein. Alternativ ist es möglich, den innerhalb des Schlauches befindlichen Luftsack an einem Ende mit einem Gasgenerator und an seinem anderen Ende mit dem eigentlichen Luftsack zu verbinden.

Der Schlauch kann aus einem kreuzweise diagonal geflochtenen Gewebe bestehen. Ein derartiger Schlauch ist grundsätzlich aus der FR 2 442 058 bekannt. Alternativ ist es möglich, den Schlauch abschnittsweise einzuschnüren, beispielsweise durch eingearbeitete Ringe, Nähte, Schnüre oder dergleichen oder durch partielles Einnähen oder Einschweißen einer Verjüngung. Auch in diesem Fall verkürzt sich der Schlauch bei einer Expansion, wobei sich der zusätzliche Vorteil ergibt, daß das Kontraktionsverhalten entlang der Länge des Schlauches auf einfache Weise variiert werden kann. Alternativ kann auch ein Schlauch vorgesehen werden, der sich bei seiner Expansion verdrillt und dadurch verkürzt.

Nachfolgend wird die folgende Erfindung rein beispielhaft anhand vorteilhafter Ausführungsformen und unter Bezugnahme auf die beigefügten Zeichnungen beschrieben. Es zeigen:
- Fig. 1: eine Seitenansicht einer ersten Ausführungsform einer Sicherheitsvorrichtung;
- Fig. 2: eine Seitenansicht einer weiteren Ausführungsform einer Sicherheitsvorrichtung;
- Fig. 3: die Seitenansicht einer dritten Ausführungsform einer Sicherheitsvorrichtung;
- Fig. 4: einen sich durch Verdrillen verkürzenden Schlauch;
- Fig. 5: einen mit Ringen versehenen Schlauch; und
- Fig. 6: die Seitenansicht und Querschnittsansicht eines mit Abnähungen versehenen Schlauches.

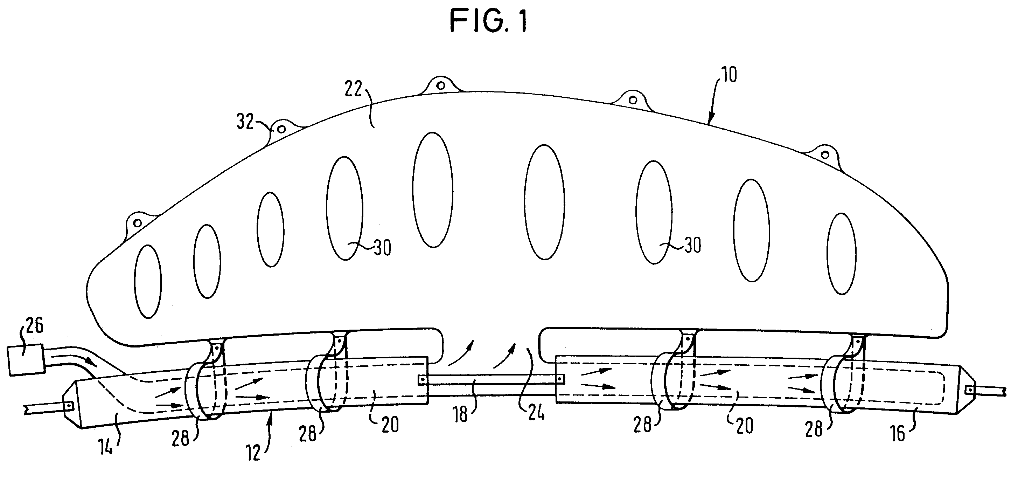

Fig. 1 zeigt eine erste Ausführungsform einer Sicherheitsvorrichtung für ein Kraftfahrzeug mit einem Luftsack 10 und einem den Luftsack entfaltenden Element 12. Das den Luftsack entfaltende Element 12 weist zwei Schläuche 14, 16 auf, die an ihren äußeren Enden fahrzeugseitig befestigt sind und die an ihren einander zugewandten Enden über Bänder 18 beabstandet miteinander verbunden sind.

Im Inneren der Schläuche 14 und 16 befindet sich ein schlauchartiger Abschnitt 20 des Luftsacks 10, der an seinem (in Fig. 1) rechten Ende geschlossen ist und der an seinem (in Fig. 1) linken Ende mit einem Gasgenerator 26 in Verbindung steht.

Etwa in der Mitte des schlauchartigen Abschnitts 20 geht dieser in einem Übergangsbereich 24 den Hauptbereich 22 des Luftsacks 10 über, wobei der Hauptbereich so gestaltet ist, daß sich dieser im wesentlichen von der A-Säule bis zur C-Säule erstreckt. Der obere Randbereich des Hauptbereiches 22 ist dabei an die Kontur des Fahrzeughimmels angepaßt.

Wie Fig. 1 zeigt, ist der Hauptbereich 22 des Luftsacks 10 mit dem schlauchartigen Abschnitt 20 nur über einen mittleren Übergangsbereich 24 verbunden. Rechts und links von diesem Übergangsbereich verläuft der untere Rand des Hauptbereichs 22 parallel und oberhalb zu dem schlauchartigen Abschnitt 20 des Luftsacks 10. In diesen Bereichen sind rechts und links von dem Übergangsbereich 24 Haltebänder 28 vorgesehen, die am unteren Rand des Hauptbereichs 22 befestigt und um die Schläuche 14 und 16 herumgeführt sind. Hierdurch erfolgt eine Verbindung zwischen dem Luftsack 10 und den Schläuchen 14 und 16. Ferner weist der Hauptbereich 22 des Luftsacks 10 mehrere im wesentlichen vertikal verlaufende und ovale Abnähungen 30 auf, die zwischen sich vertikal verlaufende Kammern bilden. Am oberen Rand des Luftsackes 10 sind mehrere Laschen 32 angenäht, mit deren Hilfe der Luftsack an seinem Gehäuse bzw. am Fahrzeug befestigt ist.

Der in Fig. 1 dargestellte Luftsack befindet sich normalerweise in einem Gehäuse, das im Bereich des Türrahmens bzw. des Fahrzeughimmels angeordnet ist. Im Falle eines Seitenaufpralls wird dieser von einem Sensor detektiert, der anschließend den Gasgenerator 26 aktiviert, wodurch zunächst Luft in den schlauchartigen Abschnitt 20 des Luftsackes 10 einströmt, was durch Pfeile angedeutet ist. Hierdurch expandiert zunächst der schlauchartige Abschnitt 20, was dazu führt, daß die Schläuche 14 und 16 ebenfalls expandieren und sich dabei verkürzen. Da die äußeren Enden der Schläuche 14 und 16 am Fahrzeug befestigt sind, wird die gesamte Sicherheitsvorrichtung zwischen diesen beiden äußeren Enden gespannt und die Sicherheitsvorrichtung wird aus dem Gehäuse herausgezogen, bis der in Fig. 1 dargestellte Zustand erreicht ist. Gleichzeitig strömt Gas in den Hauptbereich 22 des Luftsackes ein und expandiert diesen.

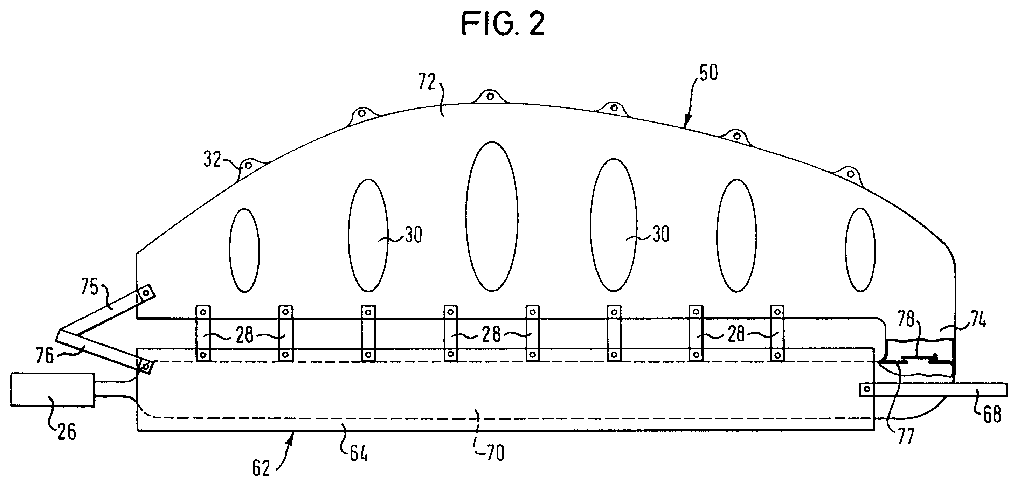

Fig. 2 zeigt eine weitere Ausführungsform einer Sicherheitsvorrichtung, wobei verglichen zu Fig. 1 gleiche Teile mit gleichen Bezugszeichen versehen sind.

Die in Fig. 2 gezeigte Sicherheitsvorrichtung weist einen Luftsack 50 auf, der einen Hauptbereich 72 und einen damit verbundenen schlauchartigen Abschnitt 70 aufweist. Das vordere Ende des schlauchartigen Abschnitts 70 ist mit einem Gasgenerator 26 verbunden. Das hintere (in Fig. 2 rechte) Ende des schlauchartigen Abschnitts 70 geht in einen Übergangsbereich 74 in den Hauptbereich 72 über.

Der schlauchartige Abschnitt 70 des Luftsacks 50 befindet sich nahezu vollständig innerhalb eines Schlauches 64, der sich bei Expansion verkürzt. Der Schlauch 64 ist an seinen beiden Enden über Bänder 68 und 76 fahrzeugseitig befestigt. Der Hauptbereich 72 des Luftsacks 50 ist ebenfalls mit einem Band 75 fahrzeugseitig fixiert, wobei hier auch mehrere Bänder vorgesehen werden können.

Wie Fig. 1 zeigt, weist der dargestellte Luftsack 50 grundsätzlich eine U-förmige Konfiguration auf, wobei ein Schenkel des "U" sich innerhalb des Schlauches 64 befindet und der andere, vergrößerte Schenkel den Hauptbereich 72 des Luftsacks 50 bildet. Zwischen den beiden Schenkeln, d.h. zwischen dem schlauchartigen Abschnitt 64 und dem Hauptbereich 72 sind mehrere Haltebänder 28 vorgesehen, die diese beiden Bereiche miteinander verbinden.

Im Übergangsbereich 74 des Luftsackes 50 ist eine zusätzliche Zwischenwand 77 vorgesehen, die mit einem Ventil 78 ausgerüstet ist, das sich bei Erreichen eines vorbestimmten Druckes innerhalb des schlauchartigen Abschnitts 70 öffnet und dadurch eine Strömungverbindung in den Hauptbereich 72 freigibt. Das Ventil 78 kann durch einen aufgeschweißten Deckel oder durch eine aufgeklebte Sollbruchstelle gebildet sein.

Die Anordnung der in Fig. 2 dargestellten Sicherheitsvorrichtung in dem Kraftfahrzeug entspricht derjenigen von Fig. 1.

Bei einem Zünden des Gasgenerators 26 aufgrund eines Seitenaufpralls füllt sich zunächst der schlauchartige Abschnitt 70 des Luftsacks 50 mit Gas, wodurch dieser schlauchartige Abschnitt 70 expandiert und dadurch auch den umgebenden Schlauch 64 expandiert, so daß sich dieser verkürzt und zwischen den Bändern 76 und 68 gespannt wird. Nach Erreichen eines bestimmten Innendrucks innerhalb des schlauchartigen Abschnitts 70 öffnet sich das Ventil 78, so daß Gas in den Hauptbereich 72 des Luftsacks 50 strömen kann, wodurch dieser expandiert. Hierbei ist der Luftsack bereits entlang seiner Längsausdehnung stabilisiert, kann sich jedoch aufgrund der losen Ankopplung über die Bänder 28 noch ausrichten.

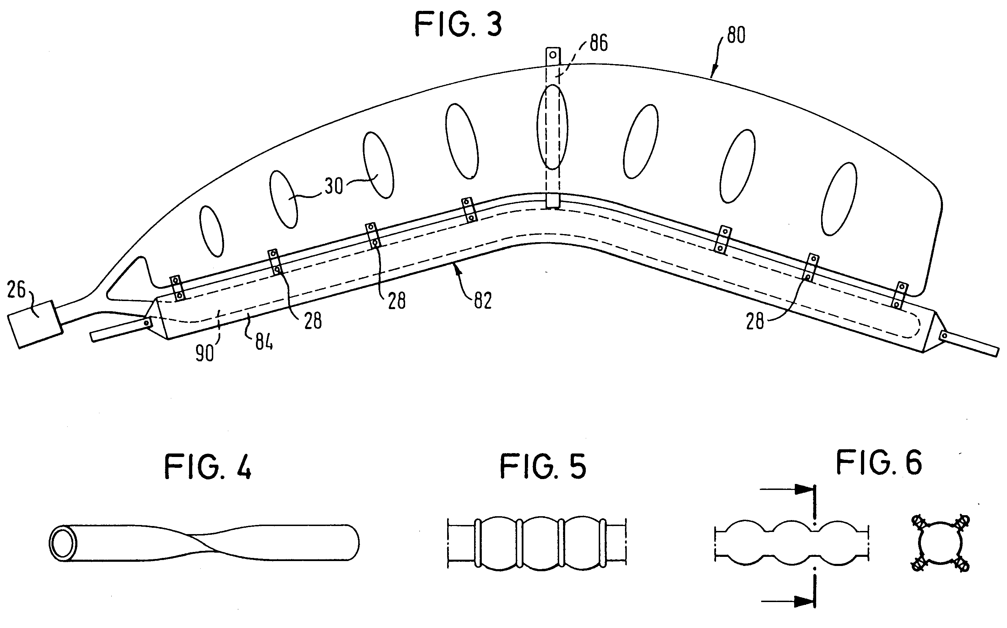

Fig. 3 zeigt eine dritte Ausführungsform einer Sicherheitsvorrichtung, wobei wiederum für gleiche Teile gleiche Bezugszeichen verwendet sind.

Bei dieser Ausführungsform weist der Luftsack 80 keinen schlauchartigen Abschnitt auf, sondern es ist ein weiterer Luftsack 90 vorgesehen, der schlauchartig ausgebildet ist und sich innerhalb des Schlauches 84 befindet. Das hintere Ende des Luftsackes 90 ist geschlossen und das vordere Ende steht mit dem Gasgenerator 26 in Verbindung. Der Luftsack 80 ist über einen getrennten Strömungskanal mit dem Gasgenerator 26 verbunden. Auch hier weist das den Luftsack 80 entfaltende Element einen Schlauch 84 auf, der sich bei Expansion verkürzt und der an seinen beiden Enden fahrzeugseitig fixiert ist. Der Luftsack 80 ist mit dem Schlauch 84 über mehrere Bänder 28 verbunden, so daß sich der Luftsack 80 oberhalb und parallel zu dem Schlauch 84 erstreckt.

Bei dieser Ausführungsform ist etwa in der Mitte des Luftsackes 80 ein Halteband 86 vorgesehen, mit dem dieser an der B-Säule des Fahrzeuges befestigt ist. Im übrigen ist die Anordnung so gewählt, daß der gespannte und expandierte Luftsack 80 die in Fig. 3 dargestellte Konfiguration einnimmt, d.h. der Luftsack 80 und der Schlauch 90 verlaufen geknickt bzw. leicht gekrümmt. Hierdurch ist die Interaktion mit vorhandenen Sicherheitsgurten weniger kritisch und es wird insgesamt eine größere Gesamtlänge des Schlauches 84 erzielt, wodurch eine bessere Straffleistung erzielt werden kann. Auch neigt diese Sicherheitsvorrichtung bei der Straffung weniger zu einem Überschwingen.

Bei der in Fig. 3 dargestellten Ausführungsform füllt sich nach Zünden des Gasgenerators 26 sowohl der innerhalb des Schlauches 84 befindliche Luftsack 90 sowie der darüber befindliche Luftsack 80. Durch Füllen des Luftsackes 90 expandiert dieser und der darum befindliche Schlauch 84, wodurch sich der Schlauch 84 kontrahiert und zwischen den beiden fahrzeugseitigen Befestigungen spannt.

Die Fig. 4, 5 und 6 zeigen mögliche Varianten der sich bei Expansion kontrahierenden Schläuche. Neben der nicht gesondert dargestellten Ausführungsform mit kreuzweise diagonal geflochtenem Gewebe ist die in Fig. 4 dargestellte Ausführungsform möglich, bei der das Schlauchgewebe so angefertigt ist, daß sich dieses bei Expansion verdrillt, wodurch sich der Schlauch verkürzt.

Bei dem in Fig. 5 dargestellten Schlauch sind mehrere Ringe in den Schlauch eingearbeitet, die einen geringeren Durchmesser als der Schlauch aufweisen. Hierdurch entstehen bei Befüllen des Schlauches mit Gas segmentartige Abschnitte, die sich zwischen den Ringen ausbauchen, wodurch sich der Schlauch verkürzt.

Fig. 6 zeigt einen Schlauch, bei dem Umfangsabschnitte des Schlauches eingenäht sind, um dadurch den Durchmesser des Schlauches in einzelnen Abschnitten zu verringern, so daß auch hier bei einer Expansion des Schlauches ein Verkürzen desselben erfolgt.

## Patentansprüche

1. Sicherheitsvorrichtung für ein Kraftfahrzeug, mit einem Luftsack (10, 50, 80) und einem den Luftsack entfaltenden Element (12, 62, 82), das zumindest einen Schlauch (14, 16, 64, 84) aufweist, der sich bei Expansion verkürzt.

2. Sicherheitsvorrichtung nach Anspruch 1,
dadurch **gekennzeichnet,** daß
der Luftsack (10, 20, 50, 70) teilweise innerhalb des Schlauches (14, 16, 64) angeordnet ist und/oder
daß zumindest zwei beabstandet miteinander verbundene Schläuche (14, 16) vorgesehen sind.

3. Sicherheitsvorrichtung nach zumindest einem der vorstehenden Ansprüche,
dadurch **gekennzeichnet,** daß
in dem Luftsack (50) ein Ventil (78) vorgesehen ist, das bei Erreichen eines vorbestimmten Druckes den Strömungsweg zu einem weiteren Luftsackbereich (72) öffnet und/oder
daß der Schlauch an zumindest einem Ende fahrzeugseitig befestigt ist.

4. Sicherheitsvorrichtung nach zumindest einem der vorstehenden Ansprüche,
dadurch **gekennzeichnet,** daß
das den Luftsack entfaltende Element einen weiteren Luftsack (90) aufweist, der innerhalb des Schlauches (84) angeordnet ist und/oder
daß der Schlauch (84) derart am Fahrzeug befestigt ist, daß dieser nach seiner Expansion und Verkürzung gekrümmt oder geknickt verläuft.

5. Sicherheitsvorrichtung nach zumindest einem der vorstehenden Ansprüche,
dadurch **gekennzeichnet,** daß
der Schlauch (84) etwa in seiner Mitte im Bereich der B-Säule des Fahrzeugs befestigt ist und/oder
daß sich der Luftsack (10, 50, 80) etwa von der A-Säule bis zur C-Säule des Fahrzeugs erstreckt.

6. Sicherheitsvorrichtung nach zumindest einem der vorstehenden Ansprüche,
dadurch **gekennzeichnet,** daß
der Luftsack mit dem Schlauch über Bänder (28) verbunden ist und/oder
daß der Luftsack und der Schlauch im Türrahmen und/oder Dachhimmel eines Fahrzeuges untergebracht sind.

7. Sicherheitsvorrichtung nach zumindest einem der vorstehenden Ansprüche,
dadurch **gekennzeichnet,** daß
der Schlauch (14, 16, 64, 84) im expandierten und verkürzten Zustand etwa auf der Höhe der Schulter des oder der Insassen angeordnet ist und/oder
daß im expandierten Zustand der Schlauch (14, 16, 64, 84) unterhalb des Luftsacks (10, 50, 80) und parallel zu diesem verläuft und/oder
daß der innerhalb des Schlauches befindliche Luftsack (20, 70, 90) an einem Ende mit einem Gasgenerator (26) in Verbindung steht.

8. Sicherheitsvorrichtung nach zumindest einem der vorstehenden Ansprüche,
dadurch **gekennzeichnet,** daß
der innerhalb des Schlauches befindliche Luftsack (16, 90) an einem Ende geschlossen ist und/oder
daß der Schlauch (14, 16, 64, 84) aus einem geflochtenen Gewebe besteht.

9. Sicherheitsvorrichtung nach zumindest einem der vorstehenden Ansprüche,
dadurch **gekennzeichnet,** daß
der Schlauch (14, 16, 64, 84) abschnittsweise eingeschnürt ist.

10. Sicherheitsvorrichtung nach zumindest einem der vorstehenden Ansprüche,
dadurch **gekennzeichnet,** daß
sich der Schlauch (14, 16, 64, 84) bei einer Expansion verdrillt und dadurch verkürzt.
